# FASCICULE DE BREVET EUROPEEN

(11) **EP 1 979 914 B1**
(45) Date de publication et mention de la délivrance du brevet: **07.04.2010**
(21) Numéro de dépôt: 07704303.2
(22) Date de dépôt: 01.02.2007
(51) Int. Cl.: G21C 21/02, G21C 3/18

(54) **DISPOSITIF DE MONTAGE DE RESSORT POUR CRAYON DE COMBUSTIBLE NUCLEAIRE**
FEDEREINPASSVORRICHTUNG FÜR EINEN NUKLEAREN BRENNSTAB
SPRING FITTING DEVICE FOR A NUCLEAR FUEL ROD

(30) Priorité: 02.02.2006 FR 0650375
(43) Date de publication de la demande: 15.10.2008
(73) Titulaire: Areva NC, 75009 Paris (FR)
(72) Inventeur: VASSEUR, Patrick, 30130 Pont Saint-Esprit (FR); ALLARD, Jean-Luc, 30430 Mejannes Le Clap (FR); FANTINI, Serge, 30150 Saint Genies de Comolas (FR)
(74) Mandataire: Poulin, Gérard
(86) Numéro de dépôt international: PCT/EP2007/050982
(87) Numéro de publication internationale: WO 2007/088185

(56) Documents cités:
- JP-A- 3 015 799
- JP-A- 11 038 179
- US-A- 5 375 756

## Description

### DOMAINE TECHNIQUE ET ART ANTÉRIEUR

La présente invention se rapporte à un dispositif de montage de ressort dans une gaine pour réaliser des crayons de combustible nucléaire. Un tel dispositif est connu du document JP 03 015799.

Un crayon de combustible nucléaire comporte une gaine munie à une extrémité d'un premier bouchon, un ressort, des pastilles de combustible nucléaire, par exemple de MOX (mélange d'oxyde de plutonium et d'oxyde d'uranium), et d'un deuxième bouchon pour fermer de manière étanche la gaine.

Le ressort permet de réserver un volume déterminé dans la gaine pour tenir compte de l'expansion des gaz contenus dans le crayon lors de l'échauffement des pastilles, et assure le maintien en position des pastilles lors du transport du crayon.

Ce ressort peut être monté dans la gaine avant ou après la mise en place des pastilles.

Ce ressort peut être monté manuellement, cependant il est préférable de limiter dans le processus de fabrication des crayons, les manipulations manuelles pour réduire les temps de fabrication.

En outre, il est important de vérifier la mise en place effective d'un ressort, une absence d'un ressort provoquant une mise au rebut du crayon.

C'est par conséquent un but de la présente invention d'offrir un dispositif automatisé de montage de ressort dans des gaines.

C'est également un but de la présente invention d'offrir un dispositif de montage de ressort dans des gaines offrant un montage sûr.

### EXPOSÉ DE L'INVENTION

Les buts précédemment énoncés sont atteints par un dispositif de montage comportant un distributeur de ressort associé à un chargeur de ressort dans une gaine, l'activation du chargeur de ressort provoquant la fourniture d'un ressort au chargeur.

En d'autres termes, une commande mécanique relie le chargeur au distributeur de ressort, il n'est alors pas nécessaire de prévoir des moyens électriques ou électroniques de synchronisation entre le chargeur et le distributeur. Le dispositif de montage est ainsi rendu plus simple et plus robuste.

La présente invention a par conséquent principalement pour objet un dispositif de montage de ressort dans une gaine pour combustible nucléaire, comportant Les caractéristiques définies dans la revendication 1.

Le distributeur peut comporter un barillet d'axe longitudinal mobile en rotation autour de son axe, ledit barillet comportant des rainures longitudinales sur sa périphérie extérieure apte à recevoir chacune un ressort, une chemise entourant le barillet, munie d'une fente longitudinale apte à laisser passer un ressort, ledit barillet et ladite chemise étant aptes à tourner l'un par rapport à l'autre autour de l'axe longitudinal pour aligner la fente avec une rainure, la chemise pouvant prendre une position de remplissage du barillet et une position de distribution, ladite fente étant disposée au droit de la glissière du chargeur en position de distribution, l'actionnement des moyens de déplacement provoquant par l'intermédiaire des moyens mécaniques la rotation du barillet par rapport à la chemise et l'alignement de la fente avec une rainure chargée d'un ressort.

De marnière avantageuse, la commande mécanique comporte un moyen anti-retour, de type roue à rochet, interposé entre le barillet et les moyens de déplacement.

La commande mécanique peut comporter un bras de liaison attaché à un cliquet de la roue à rochet, une roue dentée de la roue à rochet étant solidaire en rotation du barillet, une première extrémité d'un bras de levier étant connectée à une deuxième extrémité du bras de liaison par une liaison pivot, le bras de levier étant monté mobile en rotation sur un montant autour d'un axe de rotation, ledit montant supportant une deuxième extrémité du barillet, une deuxième extrémité du bras de levier opposée à la première extrémité par rapport à l'axe de rotation étant apte à venir en contact avec un élément mobile solidaire des moyens de déplacement pour faire pivoter le bras de levier autour de l'axe de rotation.

L'élément mobile peut comporter une rampe, le long de laquelle est apte à glisser la deuxième extrémité du bras de levier.

Dans un exemple de réalisation, le bras de levier comporte un galet monté sur la deuxième extrémité du bras de levier, ledit galet étant mobile en rotation autour d'un axe parallèle à l'axe de rotation.

Le distributeur comporte avantageusement des moyens pour verrouiller la chemise soit dans la position de remplissage, soit dans la position de distribution.

Les moyens de verrouillage peuvent comporter un écrou vissé dans un montant supportant des premières extrémités longitudinales du barillet et de la chemise et coopérant avec la chemise dans la position de remplissage et dans la position de distribution.

En outre, les moyens de déplacement peuvent comporter une courroie s'étendant longitudinalement sous la glissière, le poussoir étant solidaire en mouvement de ladite courroie.

Le chargeur peut comporter un moyen de guidage d'une extrémité ouverte de la gaine pour aligner ladite extrémité avec une extrémité débouchante de la glissière.

Le chargeur comporte avantageusement des moyens pour provoquer en fin de montage du ressort un rapprochement du moyen de guidage et du poussoir, ledit poussoir se déplaçant en direction de l'extrémité débouchante de la gaine.

La présente invention a également pour objet un procédé de montage d'un ressort dans une gaine comportant les caractéristiques définies dans la revendication 12.

Ledit procédé peut en outre comporter une étape de mise en place de la gaine en alignement du ressort.

### BRÈVE DESCRIPTION DES DESSINS

La présente invention sera mieux comprise à l'aide de la description qui va suivre et des dessins annexés, sur lesquels l'avant et l'arrière correspondent respectivement à la gauche et à la droite des dessins et sur lesquels :
- la figure 1 est une vue de côté d'une partie inférieure formant chargeur de ressort d'un dispositif de montage de ressort selon la présente invention,
- les figures 2A à 2E sont des vues de dessus de la figure 1 dans différentes phases de fonctionnement,

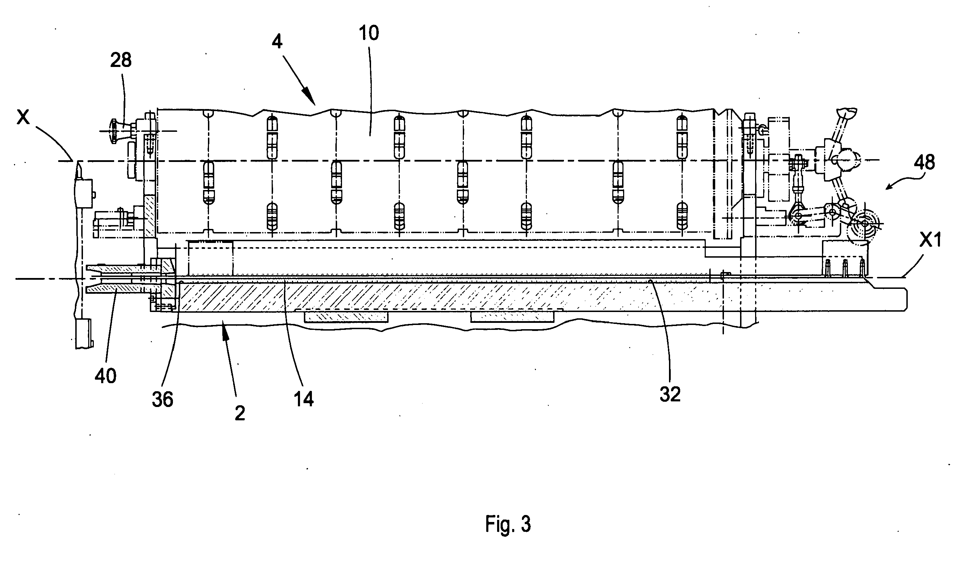

- la figure 3 est une vue en coupe longitudinale de la figure 1,
- la figure 4 est une vue de côté de la partie supérieure formant distributeur de ressort du dispositif de montage selon la présente invention,
- les figures 5A et 5B sont des vues de détail de la figure 4 dans deux positions de fonctionnement,
- la figure 6 est une vue selon la flèche A de la figure 4,
- les figures 7A et 7B sont des vues en coupe selon le plan de coupe E-E de la figure 5B dans une position de remplissage et dans une position de distribution respectivement.

### EXPOSÉ DÉTAILLÉ DE MODES DE RÉALISATION PARTICULIERS

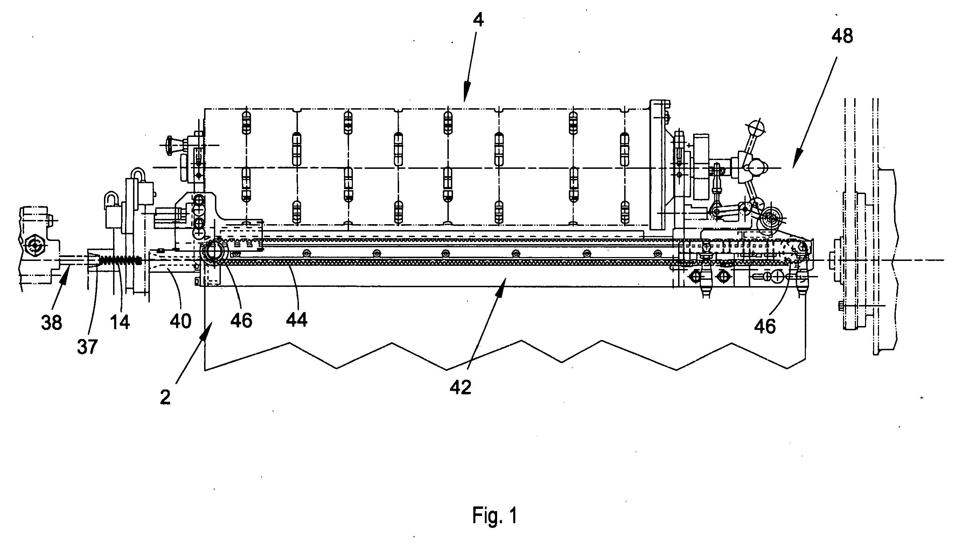

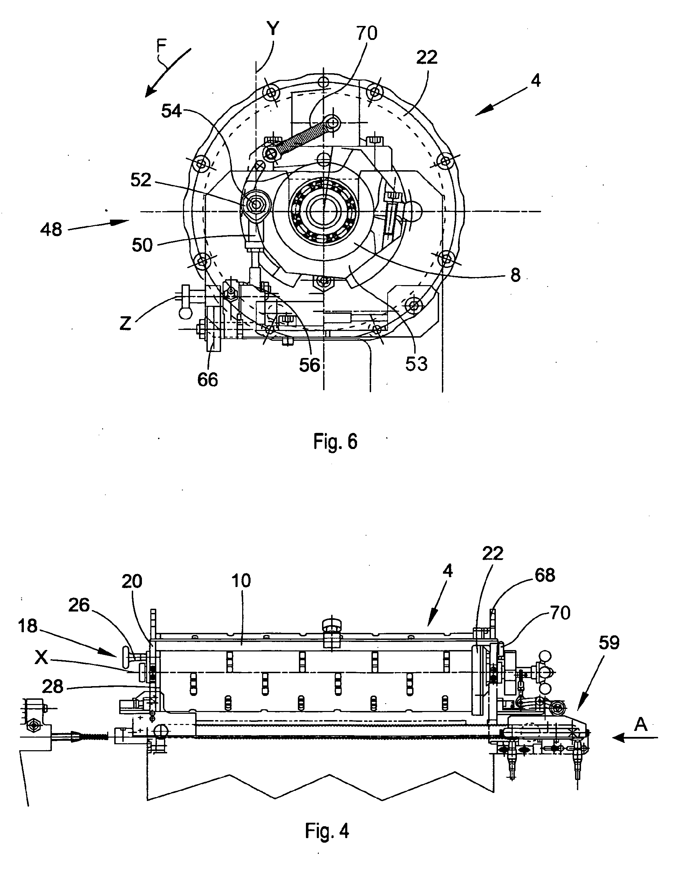

Sur la figure 1, on peut voir un mode de réalisation d'un dispositif de montage de ressort selon la présente invention comportant un chargeur de ressort 2 en traits pleins, formant la partie inférieure du dispositif et un distributeur de ressort 4 au chargeur 2 en pointillés, formant la partie supérieure du dispositif. Le distributeur 4 est représenté en traits pleins sur la figure 4.

Le dispositif selon la présente invention est destiné à monter des ressorts dans des gaines avant
ou après la mise en place de pastilles de combustible nucléaire, notamment de MOX pour former des crayons de combustible nucléaire.

Les gaines utilisées sont de forme cylindrique de grande longueur relativement à leur diamètre, une extrémité étant obturée pour permettre le chargement d'un ressort, puis d'une colonne de pastilles, ou d'une colonne de pastilles, puis d'un ressort.

Le ressort est un ressort du type ressort hélicoïdal et est destiné à réserver un volume déterminé pour la dilation des gaz enfermés dans le crayon lors de leur échauffement et à maintenir les pastilles sensiblement immobiles.

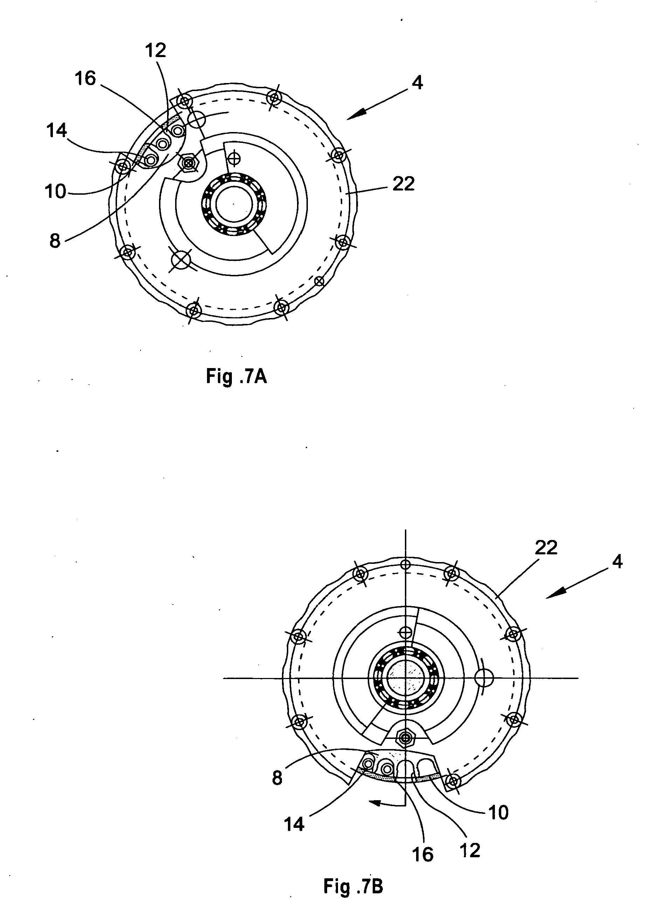

Le distributeur 4 selon la présente invention comporte un barillet 8 (figure 7B) d'axe X, monté en rotation autour de son axe X et une chemise 10 entourant ledit barillet 8; la chemise 10 est mobile en rotation relativement au barillet 8.

Le barillet comporte sur sa périphérie extérieure des rainures 12 longitudinales pour recevoir un ressort 14, les rainures 12 sont réparties avantageusement de manière régulière.

La chemise 10 comporte une fente 16 apte à laisser passer un ressort 14 ; ainsi lorsque la fente est alignée avec une rainure 12 chargée d'un ressort 14, celui-ci peut passer par la fente 16.

La chemise peut avoir une position de remplissage I représentée sur la figure 7A et une position de distribution II du barillet représentée sur la figure 7B. Le distributeur comporte alors des moyens 18 pour immobiliser la chemise 10 dans l'une ou l'autre des positions de remplissage I et de distribution II.

Le distributeur comporte des premier et deuxième montants latéraux 20, 22 montés de part et d'autre de la chemise 10 et du barillet 8 pour les supporter en rotation.

Les moyens 18 de verrouillage de la chemise sont formés d'un pion 26 mobile axialement dans le montant 20 et apte à coopérer avec la chemise 10 dans la position de remplissage I et dans la position de distribution II.

Dans la position de remplissage I, une extrémité (non visible) du pion 26 pénètre dans un premier orifice (non visible) pratiqué dans une première extrémité longitudinale 28 de la chemise 10, et dans la position de distribution II dans une deuxième orifice (non visible) de la chemise 10.

Dans l'exemple représenté, le pion 26 est formé par une extrémité filetée d'un écrou, qui est vissé dans le montant 20 ; le passage de la position I à la position II s'effectue par dévissage et vissage de l'écrou 26. On pourrait prévoir un pion 26 ramené élastiquement en direction de la chemise 10, le changement de position de la chemise 10 s'effectuerait par traction sur le pion 26 pour retirer l'extrémité du pion 26 de l'un des orifices de la chemise 10.

Le distributeur peut comporter des moyens pour vérifier la présence d'un ressort 14 dans une rainure 12, par exemple des moyens optiques de type laser.

On préfère cependant vérifier directement la présence du ressort dans la gaine au moyen d'un capteur, par exemple de type optique.

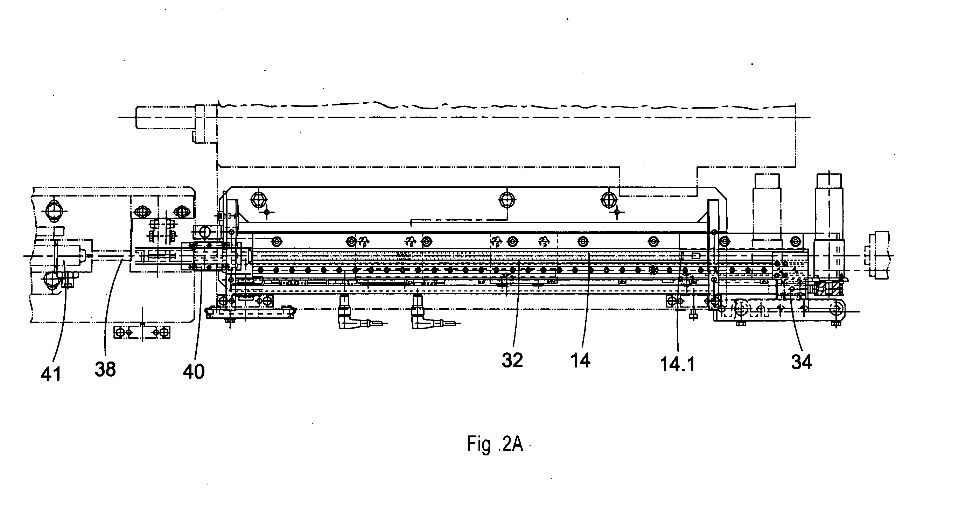

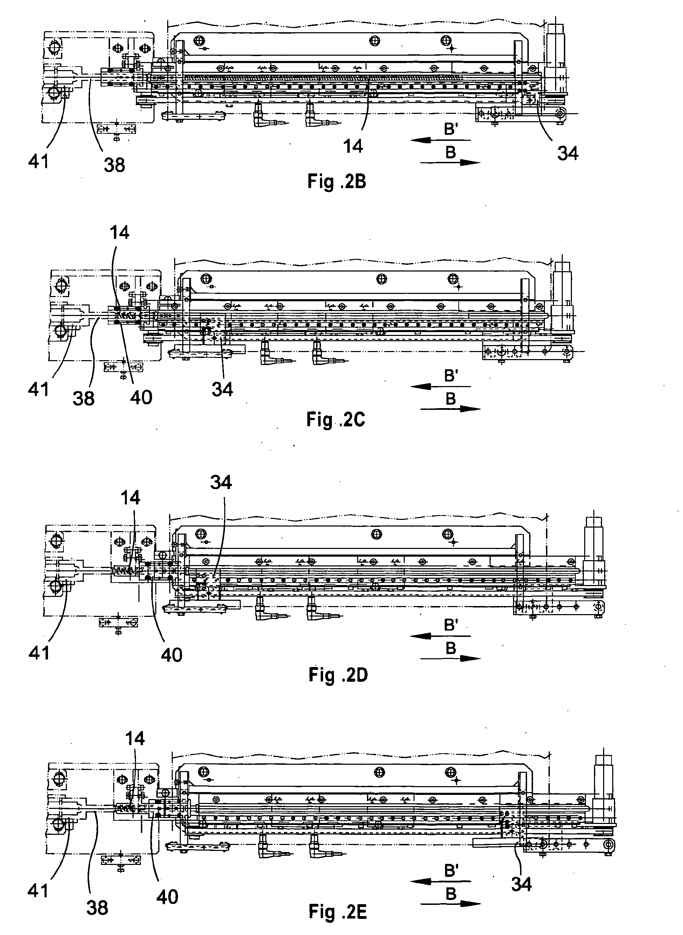

Le distributeur 4 distribue les ressorts au chargeur 2. En particulier, un ressort logé dans une rainure 12 tombe à travers la fente 16 dans une glissière 32 du chargeur 2, la glissière 32 étant d'axe X1 parallèle à l'axe X (figure 2).

Le chargeur 2 est disposé en dessous du distributeur 4, ainsi les ressorts sont distribués par gravité dans la glissière 32.

Le chargeur 2 comporte également un poussoir 34 mobile longitudinalement le long de l'axe X1 pour exercer un effort de poussée sur une première extrémité 14.1 du ressort 14 ou extrémité arrière.

La glissière 32 comporte une extrémité débouchante 36 par laquelle le ressort 14 sort. La gaine 38, et notamment son extrémité ouverte 37 sont avantageusement maintenues par un moyen de guidage 40, pour aligner l'extrémité ouverte 37 de la gaine 38 avec l'extrémité débouchante 36 de la glissière 32.

La gaine 38 peut être maintenue en position par une pince 41 disposée à l'extrémité avant du chargeur 2.

Le chargeur comporte des moyens 42 pour déplacer le poussoir le long de l'axe X1. Sur la figure 1, les moyens 42 sont formés, par exemple par une courroie 44 munie de crans, lesdits crans engrenant deux roues dentées 46 montées en rotation entre une extrémité arrière de la glissière et son extrémité avant. Ainsi, le poussoir 34 peut se déplacer sur toute la longueur de la glissière. D'autres moyens de déplacement peuvent convenir, par exemple un dispositif muni d'une vis sans fin est également envisageable.

Selon la présente invention, le distributeur est commandé par les moyens de déplacement 42 du poussoir 34. Ainsi à chaque activation du chargeur 2, celui-ci commande au distributeur 4 de lui fournir un ressort 14.

Pour cela, le dispositif selon la présente invention comporte des moyens mécaniques 48 destinés à associer le déplacement de la courroie 44 à la rotation du barillet 8.

Les moyens mécaniques 48 comportent un bras de liaison 50 monté par une première extrémité 52 sur une interface 72 solidaire en rotation de manière unidirectionnelle d'une face latérale arrière 53 du barillet 8. Ainsi, le déplacement de l'extrémité 52 ne provoque le déplacement du barillet 8 que dans un sens de rotation F. Dans un autre sens de rotation, l'extrémité 52 et le barillet 8 ont des mouvements indépendants.

L'interface 72 est par exemple formée par une roue à rochet, une roue (non représentée) munie sur sa périphérie de dents inclinés étant montée solidaire en rotation du barillet 8 parallèlement à la face arrière 53 du barillet et un cliquet (non représenté) apte à entraîner la roue dans un sens de rotation étant solidaire de l'extrémité 52.

Tout autre dispositif permettant un entraînement unidirectionnel en rotation du barillet autour de l'axe X est envisageable.

Le deuxième montant 22 a une forme de couronne, la face arrière 53 du barillet est alors accessible par un partie centrale ouverte du deuxième montant 22.

L'extrémité 52 du bras 50 est montée libre en rotation autour d'une tige 54 solidaire du cliquet; ainsi le bras 50 peut avoir un mouvement angulaire par rapport au cliquet.

Un effort vers le haut ou vers le bas appliqué à la tige 54 provoque un déplacement du cliquet autour de l'axe X, qui en engrenant une dent de la roue, provoque une rotation du barillet 8 autour de l'axe X dans la direction F.

Lors du retour en position repos de la tige 54, le cliquet se déplace en rotation autour de l'axe X dans un sens opposé au sens F, il glisse alors sur la dent, et se retrouve en position pour entraîner à nouveau la roue à rochet.. Ainsi à chaque rotation du barillet 8, une rainure 12 munie d'un ressort 14 est mise en regard de la fente 16 de la chemise 10.

Le bras de liaison 50 est lié par une deuxième extrémité 58 à une première extrémité 57 d'un bras de levier 56, monté en rotation sur le montant 22 sensiblement au niveau de sa partie médiane, autour d'un axe Z. Le bras de liaison 50 et le bras de levier 58 sont mobiles en rotation l'un par rapport à l'autre.

Le bras de levier a, dans l'exemple représenté, une forme coudée, le coude étant disposé au niveau de l'axe de rotation du levier.

Le bras de levier est apte à être mis en rotation autour de l'axe Z, par un élément mobile 59 avec la courroie 44 du chargeur.

Dans l'exemple représenté, l'élément mobile comporte une pente 60 apte à coopérer avec une deuxième extrémité 62 du bras de levier 56.

On peut prévoir de réaliser le poussoir 34 et l'élément mobile 59 d'une seule pièce.

Ainsi, lorsque la deuxième extrémité 62 rencontre la pente 60, la position du bras de levier 56 est modifiée, celui-ci tourne autour de l'axe Z et entraîne avec lui le bras de liaison 50, qui a alors un mouvement sensiblement selon un axe Y, orthogonal aux axes X et Z. Le mouvement selon Y du bras 50 provoque la rotation du barillet 8 dans la direction de la flèche F (figure 6)

La pente 60 est inclinée vers l'arrière. L'élément mobile 59 comporte également une partie 64 sensiblement parallèle au plan de la courroie, disposée en avant de la pente 60. Ainsi lorsque l'élément mobile 59 recule, la deuxième extrémité 62 du bras de levier 56 rencontre en premier la pente 60, puis la partie 64.

La partie 64 assure le maintien du bras de levier en position de largage d'un ressort, c'est-à-dire le maintien d'une rainure du barillet 8 au droit de la glissière 32, en empêchant tout autre mouvement du barillet 8.

La pente 60 n'est pas nécessairement plane, celle-ci peut être concave, convexe, ou en palier. On pourrait également envisager un élément mobile 59 sous forme d'un excentrique mis en rotation par le déplacement de la courroie 44.

De manière avantageuse, la deuxième extrémité 62 du bras de levier 56 est munie d'un galet 66 monté libre en rotation sur le bras de levier 56 pour réduire les frottements du bras de levier 56 sur l'élément mobile 62.

Un moyen élastique 70 relie le montant 22 à l'interface 72, dans l'exemple le moyen élastique ramène le cliquet en position repos.

Nous allons maintenant expliquer le fonctionnement du dispositif de montage de ressort selon la présente invention.

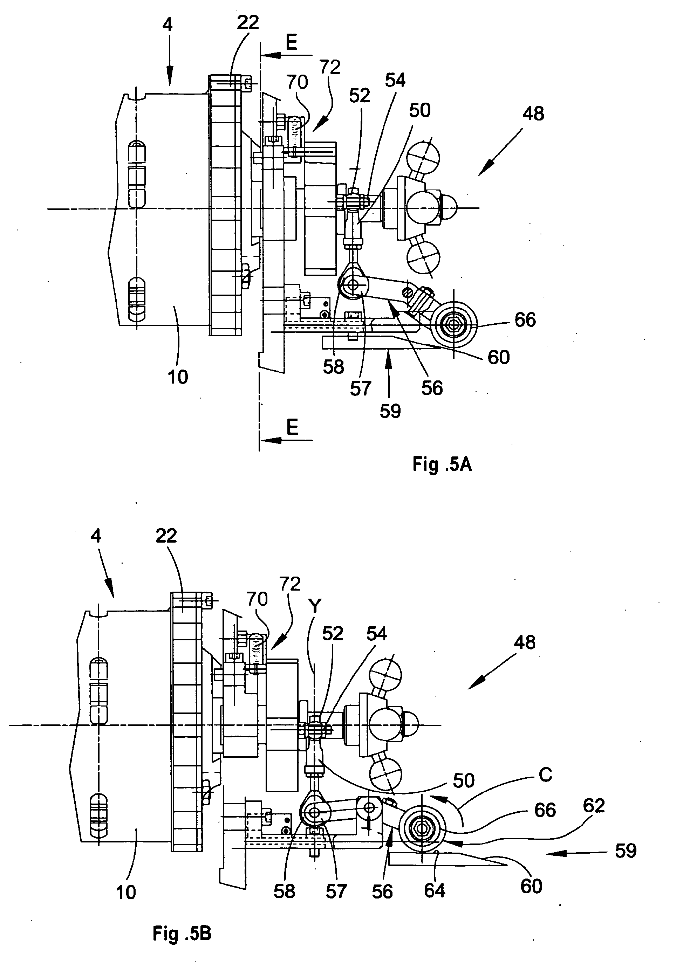

Le chargeur 2 est actionné, la courroie 44 se déplace dans la direction B vers l'arrière (figure 2A) entraînant l'élément mobile 59. La pente 60 rencontre alors le galet 66, provoquant le basculement du bras de levier 56 autour de l'axe Z selon la flèche C (figure 5B). Le bras de liaison 50 a alors un mouvement selon l'axe Y vers le bas, exerçant un effort de traction vers le bas sur la tige 54 et le cliquet, ce qui provoque une rotation du barillet 8 autour de l'axe X par l'intermédiaire de l'interface 72 tel que décrit précédemment. Une rainure 12 chargée d'un ressort est alors mise en regard de la fente 16.

Un ressort tombe dans la glissière 32 du chargeur.

Sur la figure 2B, le moyen de guidage 40 avance pour placer la gaine en alignement de la glissière 32 et la pince se ferme, immobilisant la gaine.

La courroie 44 est ensuite mise en mouvement dans le sens de la flèche B' vers l'avant, le poussoir 34 exerce alors un effort de poussée sur le ressort 14, qui est introduit dans la gaine (figure 2C).

Ensuite, par un mouvement combiné, le moyen de guidage se déplace dans la direction B, tandis que le poussoir 34 se déplace selon la direction B' pour maintenir le ressort 14 dans la gaine (figure 2D).

Enfin, le moyen de guidage et le poussoir 34 se déplacent dans la direction B, jusqu'à leur position de repos (figure 2E).

La gaine est prête à recevoir les pastilles ou à être bouchée si les pastilles ont été mises en place avant le ressort, et le dispositif de montage de ressort est prêt à charger une nouvelle gaine.

On peut prévoir dans une première étape, le remplissage du distributeur. Pour cela, l'écrou est desserré, la chemise 10 est tournée autour de l'axe X de manière à placer la fente 16 dans la position I représentée à la figure 7A, la fente 16 est dans une position supérieure, l'écrou est alors serré pour fixer cette position I.

Dans cette position I, la fente 16 est en regard d'une goulotte de chargement de ressort (non représentée). Un ressort 14 est ensuite mis en place dans une rainure 12, puis le barillet 8 est tourné autour de son axe X, pour présenter la rainure 12 vide suivante en regard de la fente 16 et permettre son chargement avec un ressort. Une poignée 68 est avantageusement prévue sur le barillet 8 pour le faire tourner autour de l'axe X.

Une rainure 12 est laissée vide en face de la fente 16.

On peut prévoir de remplir toutes les rainures 12 sauf une ou une partie d'entre elles.

Lorsque le nombre de rainures désirées est chargé avec un ressort, l'écrou est à nouveau desserré, la chemise 10 est tournée autour de l'axe X pour placer la fente dans la position II de distribution représentée sur la figure 7B. Lors de cette rotation, le barillet 8 tourne en même temps que la chemise 10, la fente 16 reste alors en face de la rainure 12 vide. L'écrou est ensuite serré pour fixer la chemise dans cette position II.

Le distributeur 4 est alors prêt à fournir des ressorts 14 au chargeur 2.

## Revendications

1. Dispositif de montage de ressort dans une gaine pour combustible nucléaire, comportant un distributeur (4) de ressort, un chargeur (2) de ressort dans la gaine, le distributeur (4) fournissant des ressorts (14) au chargeur (2), ledit chargeur (2) comportant une glissière (32) longitudinale pour recevoir le ressort (14), ladite glissière (32) comportant une extrémité débouchante (36) par laquelle le ressort (14) est envoyé dans la gaine, un poussoir (34) apte à se déplacer dans la glissière (32) pour mettre en place le ressort dans la gaine, et des moyens de déplacement (42) dudit poussoir (34), **caractérisé en ce que** ledit dispositif comporte également une commande mécanique (48) qui relie le chargeur (2) au distributeur (4) de ressort, pour associer l'actionnement des moyens de déplacement (42) à celui du distributeur (4) de ressort, de façon à provoquer la fourniture du ressort suite à l'activation du chargeur (2) de ressort.

2. Dispositif selon la revendication 1, dans lequel le distributeur (4) comporte un barillet (8) d'axe longitudinal (X) mobile en rotation autour de son axe (X), ledit barillet ((8) comportant des rainures (12) longitudinales sur sa périphérie extérieure apte à recevoir chacune un ressort (14), une chemise (10) entourant le barillet (8), munie d'une fente (16) longitudinale apte à laisser passer un ressort (14), ledit barillet (8) et ladite chemise (10) étant aptes à tourner l'un par rapport à l'autre autour de l'axe longitudinal (X) pour aligner la fente (16) avec une rainure (12), la chemise (10) pouvant prendre une position de remplissage (I) du barillet (8) et une position de distribution (II), ladite fente (16) étant disposée au droit de la glissière (32) du chargeur en position de distribution (II), l'actionnement des moyens de déplacement (42) provoquant par l'intermédiaire de la commande mécanique (48) la rotation du barillet (8) par rapport à la chemise (10) et l'alignement de la fente (16) avec une rainure (12) chargée avec un ressort (14).

3. Dispositif selon la revendication 2, dans lequel la commande mécanique (48) comporte un moyen anti-retour de type roue à rochet interposé entre le barillet (8) et les moyens de déplacement.

4. Dispositif selon la revendication précédente, dans lequel la commande mécanique comporte un bras de liaison (50) attaché à un cliquet de la roue à rochet, une roue dentée de la roue à rochet étant solidaire en rotation du barillet (8), une première extrémité d'un bras de levier (56) étant connectée à une deuxième extrémité du bras de liaison (50) par une liaison pivot, le bras de levier (56) étant monté mobile en rotation sur un deuxième montant (22) autour d'un axe de rotation(Z), ledit deuxième montant (22) supportant une deuxième extrémité du barillet (8), une deuxième extrémité (62) du bras de levier (56) opposée à la première extrémité (57) par rapport à l'axe de rotation (Z) étant apte à venir en contact avec un élément mobile (59) solidaire des moyens de déplacement (42) pour faire pivoter le bras de levier (56) autour de l'axe de rotation (Z).

5. Dispositif selon la revendication précédente, dans lequel l'élément mobile (59) comporte une rampe (60), le long de laquelle est apte à glisser la deuxième extrémité (62) du bras de levier (56).

6. Dispositif selon la revendication 4 ou 5, dans lequel le bras de levier (56) comporte un galet (66) monté sur la deuxième extrémité (62) du bras de levier (56), ledit galet (66) étant mobile en rotation autour d'un axe parallèle à l'axe de rotation (Z).

7. Dispositif selon l'une quelconque des revendications 2 à 6, dans lequel le distributeur (4) comporte des moyens (20) pour verrouiller la chemise (10) soit dans la position de remplissage (I), soit dans la position de distribution (II).

8. Dispositif selon la revendication précédente, dans lequel les moyens (20) de verrouillage comportent un élément fileté (26) vissé dans un premier montant (20) supportant des premières extrémités longitudinales du barillet (8) et de la chemise (10) et coopérant avec la chemise (10) dans la position de remplissage (I) et dans la position de distribution (II).

9. Dispositif selon l'une quelconque des revendications précédentes, dans lequel les moyens de déplacement (42) comportent une courroie (44) s'étendant longitudinalement sous la glissière (32), le poussoir (34) étant solidaire en mouvement de ladite courroie (32).

10. Dispositif selon l'une quelconque des revendications précédentes, dans lequel le chargeur (2) comporte un moyen (40) de guidage d'une extrémité ouverte de la gaine (38) pour aligner ladite extrémité avec l'extrémité débouchante (36) de la glissière (32).

11. Dispositif selon la revendication précédente, dans lequel le chargeur (2) comporte des moyens pour provoquer en fin de montage du ressort (14) un rapprochement du moyen de guidage (40) et du poussoir (34), ledit poussoir (34) se déplaçant en direction de l'extrémité débouchante (36) de la glissière (32).

12. Procédé de montage d'un ressort dans une gaine mettant en oeuvre un dispositif de montage de ressort comportant un chargeur (2) de ressort, un distributeur (4) de ressort pour ledit chargeur (2) et une commande mécanique (48) qui relie le chargeur (2) au distributeur (4) de ressort, de façon à provoquer la fourniture du ressort suite à l'activation du chargeur de ressort , comportant les étapes :
- d'activation du chargeur (2),
- d'activation du distributeur (4) par le chargeur (2) au moyen de la commande mécanique (48),
- de fourniture d'un ressort (14) audit chargeur (2),
- de chargement du ressort (14) dans la gaine.

13. Procédé selon la revendication précédente, comportant une étape de mise en place de la gaine en alignement du ressort.

## Claims

1. Spring mounting device in a cladding tube for nuclear fuel, comprising a spring distributor (4), a spring loader (2) in the cladding tube, the distributor (4) supplying springs (14) to the loader (2), said loader (2) comprising a longitudinal slide (32) in order to receive the spring (14), said slide (32) comprising an outlet end (36) whereby the spring (14) is sent in the cladding tube, a pusher (34) able to move in the slide (32) in order to set the spring into place in the cladding tube, and means of displacement (42) of said pusher (34), **characterised in that** said device comprises also a mechanical control (48) that connects the spring loader (2) to the spring distributor (4) to associate the operating of the means of displacement (42) to the operating of the spring distributor (4) such that the mechanical control causes the supply of a spring following to an actuation of the spring loader (2).

2. Device according to claim 1, wherein the distributor (4) comprises a cylinder barrel (8) of longitudinal axis (X) pivotable around its axis (X), said cylinder barrel (8) comprising longitudinal grooves (12) on its outer peripheral surface able to each receive one spring (14), a jacket (10) surrounding the cylinder barrel (8), provided with a longitudinal slot (16) able to allow a spring (14) to pass, said cylinder barrel (8) and said jacket (10) being able to turn one in relation to the other around the longitudinal axis (X) in order to align the slot (16) with a groove (12), the jacket (10) being able to take a filling position (I) of the cylinder barrel (8) and a distribution position (II), said slot (16) being arranged opposite to the slide (32) of the loader in distribution position (II), the actuation of the means of displacement (42) causing by the intermediary of the mechanical means (48) the rotation of the cylinder barrel (8) in relation to the jacket (10) and the alignment of the slot (16) with a groove (12) loaded with a spring (14).

3. Device according to claim 2, wherein the mechanical control (48) comprises a non-return means of the ratchet wheel type interposed between the cylinder barrel (8) and the means of displacement.

4. Device according to the preceding claim, wherein the mechanical control (48) comprises a link arm (50) attached to a pawl of the ratchet wheel, a sprocket wheel of the ratchet wheel being integral in rotation with the cylinder barrel (8), a first end of a lever arm (56) being connected to a second end of the link arm (50) by a pivot connection, the lever arm (56) being mounted pivotable on a second post (22) around an axis of rotation (Z), said second post (22) supporting a second end of the cylinder barrel (8), a second end (62) of the lever arm (56) opposite the first end (57) in relation to the axis of rotation (Z) being able to come into contact with a mobile element (59) integral with the means of displacement (42) in order to pivot the lever arm (56) around the axis of rotation (Z).

5. Device according to the preceding claim, wherein the mobile element (59) comprises a ramp (60), along which the second end (62) of the lever arm (56) is able to slide.

6. Device according to claim 4 or 5, wherein the lever arm (56) comprises a roller (66) mounted on the second end (62) of the lever arm (56), said roller (66) being pivotable around an axis parallel to the axis of rotation (Z).

7. Device according to any of claims 2 to 6, wherein the distributor (4) comprises means (20) for locking the jacket (10) either in the filling position (I), or in the distribution position (II).

8. Device according to the preceding claim, wherein the means (20) of locking comprise a threaded element (26) screwed in a first post (20) supporting the first longitudinal ends of the cylinder barrel (8) and of the jacket (10) and cooperating with the jacket (10) in the filling position (I) and in the distribution position (II).

9. Device according to any of the claims 1 to 8, wherein the means of displacement (42) comprise a belt (44) extending longitudinally under the slide (32), the pusher (34) being integral in movement with said belt (32).

10. Device a according to any of the claims 1 to 9, wherein the loader (2) comprises a means (40) of guiding an open end of the cladding tube (38) in order to align said end with the outlet end (36) of the slide (32).

11. Device according to the preceding claim, wherein the loader (2) comprises means to cause at the end of the mounting of the spring (14) a moving closer of the guide element (40) and of the pusher (34), said pusher (34) moving in the direction of the outlet end (36) of the slide (32).

12. Method for mounting a spring in a cladding tube implementing a spring mounting device comprising a spring loader (2), a spring distributor (4) for said loader (2) and a mechanical control (48) that connects the loader (2) to the spring distributor (4) such that the mechanical control causes the supply of a spring following to an actuation of the spring loader (2), comprising the steps:
- of actuating the loader (2),
- of actuating the distributor (4) by the loader (2) by the mechanical control (48),
- of supplying a spring (14) to said loader (2),
- of loading the spring (14) in the cladding tube.

13. Method according to the preceding claim, comprising a step of setting into place of the cladding tube in alignment with the spring.

## Patentansprüche

1. Vorrichtung zur Montage einer Feder in einer Kernbrennstoffhülle, welche aufweist:
eine Feder-Ausgabevorrichtung (4), eine Feder-Beschickungsvorrichtung (2) zum Einsetzen einer Feder in die Hülle, wobei die Ausgabevorrichtung (4) der Beschickungsvorrichtung (2) Federn (14) liefert, wobei die Beschickungsvorrichtung (2) aufweist: eine sich längs erstreckende Gleitführung (32) zum Aufnehmen der Feder (14), wobei die Gleitführung (32) ein Mündungsende (36) aufweist, über welches die Feder (14) in die Hülle befördert wird, einen Stößel (34), der geeignet ist, sich in der Gleitführung (32) zu bewegen, um die Feder in die Hülle einzusetzen, und Bewegungsmittel (42) zum Bewegen des Stößels (34), **dadurch gekennzeichnet, dass** die Vorrichtung außerdem eine mechanische Steuerung (48) aufweist, welche die Beschickungsvorrichtung (2) mit der Feder-Ausgabevorrichtung (4) verbindet, um die Betätigung der Bewegungsmittel (42) mit derjenigen der Feder-Ausgabevorrichtung (4) zu verknüpfen, so dass die Lieferung der Feder im Anschluss an die Aktivierung der Feder-Beschickungsvorrichtung (2) bewirkt wird.

2. Vorrichtung nach Anspruch 1, wobei die Ausgabevorrichtung (4) aufweist: eine Trommel (8) mit einer Längsachse (X), die um ihre Achse (X) drehbeweglich ist, wobei die Trommel (8) auf ihrem Außenumfang Längsnuten (12) aufweist, die geeignet sind, jeweils eine Feder (14) aufzunehmen, einen die Trommel (8) umgebenden Mantel (10), der mit einem Längsschlitz (16) versehen ist, der geeignet ist, eine Feder (14) durchzulassen, wobei die Trommel (8) und der Mantel (10) geeignet sind, relativ zueinander um die Längsachse (X) zu rotieren, um den Schlitz (16) auf eine Nut (12) auszurichten, wobei der Mantel (10) eine Füllposition (I) zum Füllen der Trommel (8) und eine Ausgabeposition (II) einnehmen kann, wobei der Schlitz (16) in der Ausgabeposition (II) im Bereich der Gleitführung (32) der Beschickungsvorrichtung angeordnet ist, wobei die Betätigung der Bewegungsmittel (42) über die mechanische Steuerung (48) die Rotation der Trommel (8) bezüglich des Mantels (10) und die Ausrichtung des Schlitzes (16) auf eine mit einer Feder (14) beschickte Nut (12) bewirkt.

3. Vorrichtung nach Anspruch 2, wobei die mechanische Steuerung (48) ein Rücklaufsperrmittel vom Typ eines Sperrrades aufweist, das zwischen der Trommel (8) und den Bewegungsmitteln angeordnet ist.

4. Vorrichtung nach dem vorhergehenden Anspruch, wobei die mechanische Steuerung einen Verbindungsarm (50) aufweist, der an einer Sperrklinke des Sperrrades befestigt ist, wobei ein Zahnrad des Sperrrades mit der Trommel (8) drehfest verbunden ist, wobei ein erstes Ende eines Hebelarmes (56) mit einem zweiten Ende des Verbindungsarmes (50) über eine Schwenkverbindung verbunden ist, wobei der Hebelarm (56) an einer zweiten Säule (22) drehbeweglich um eine Drehachse (Z) angebracht ist, wobei die zweite Säule (22) ein zweites Ende der Trommel (8) stützt, wobei ein zweites Ende (62) des Hebelarmes (56), das dem ersten Ende (57) bezüglich der Drehachse (Z) gegenüberliegend ist, geeignet ist, mit einem beweglichen Element (59) in Kontakt zu kommen, das mit den Bewegungsmitteln (42) aus einem Stück besteht, um den Hebelarm (56) um die Drehachse (Z) schwenken zu lassen.

5. Vorrichtung nach dem vorhergehenden Anspruch, wobei das bewegliche Element (59) eine Rampe (60) aufweist, entlang welcher das zweite Ende (62) des Hebelarmes (56) zu gleiten in der Lage ist.

6. Vorrichtung nach Anspruch 4 oder 5, wobei der Hebelarm (56) eine Rolle (66) aufweist, die an dem zweiten Ende (62) des Hebelarmes (56) angebracht ist, wobei die Rolle (66) drehbeweglich um eine Achse ist, die zu der Drehachse (Z) parallel ist.

7. Vorrichtung nach einem der Ansprüche 2 bis 6, wobei die Ausgabevorrichtung (4) Mittel (20) zum Verriegeln des Mantels (10) entweder in der Füllposition (I) oder in der Ausgabeposition (II) aufweist.

8. Vorrichtung nach dem vorhergehenden Anspruch, wobei die Mittel (20) zum Verriegeln ein mit einem Gewinde versehenes Element (26) aufweisen, das in eine erste Säule (20) eingeschraubt ist, die erste Längsenden der Trommel (8) und des Mantels (10) stützt, und das mit dem Mantel (10) in der Füllposition (I) und in der Ausgabeposition (II) zusammenwirkt.

9. Vorrichtung nach einem der vorhergehenden Ansprüche, wobei die Bewegungsmittel (42) einen Antriebsriemen (44) aufweisen, der sich in Längsrichtung unter der Gleitführung (32) erstreckt, wobei der Stöße (34) mit dem Antriebsriemen (44) bewegungsstarr verbunden ist.

10. Vorrichtung nach einem der vorhergehenden Ansprüche, wobei die Beschickungsvorrichtung (2) ein Führungsmittel (40) zum Führen eines offenen Endes der Hülle (38) aufweist, um das Ende gegenüber dem Mündungsende (36) der Gleitführung (32) auszurichten.

11. Vorrichtung nach dem vorhergehenden Anspruch, wobei die Beschickungsvorrichtung (2) Mittel aufweist, um am Ende der Montage der Feder (14) eine Annäherung des Führungsmittels (40) und des Stößels (34) zu bewirken, wobei sich der Stößel (34) in Richtung des Mündungsendes (36) der Gleitführung (32) bewegt.

12. Verfahren zur Montage einer Feder in einer Hülle, bei dem eine Vorrichtung zur Montage einer Feder zur Anwendung kommt, die eine Feder-Beschickungsvorrichtung (2), eine Feder-Ausgabevorrichtung (4) für die Beschickungsvorrichtung (2) und eine mechanische Steuerung (48), welche die Beschickungsvorrichtung (2) mit der Feder-Ausgabevorrichtung (4) verbindet, so dass die Lieferung der Feder im Anschluss an die Aktivierung der Feder-Beschickungsvorrichtung bewirkt wird, aufweist, welches folgende Schritte aufweist:
- Aktivieren der Beschickungsvorrichtung (2),
- Aktivieren der Ausgabevorrichtung (4) durch die Beschickungsvorrichtung (2) mittels der mechanischen Steuerung (48),
- Liefern einer Feder (14) an die Beschickungsvorrichtung (2),
- Einsetzen der Feder (14) in die Hülle.

13. Verfahren nach dem vorhergehenden Anspruch, welches einen Schritt des Anbringens der Hülle in einer zur Feder ausgerichteten Position aufweist.
